(19) Europäisches Patentamt
European Patent Office
Office européen des brevets

(11) **EP 2 342 547 B1**

(12) **FASCICULE DE BREVET EUROPEEN**

(45) Date de publication et mention
de la délivrance du brevet:
**29.08.2012 Bulletin 2012/35**

(21) Numéro de dépôt: **09783876.7**

(22) Date de dépôt: **09.10.2009**

(51) Int Cl.:
*G01N 1/40* *(2006.01)*       *G01N 30/72* *(2006.01)*
*G01N 1/22* *(2006.01)*       *G01N 29/02* *(2006.01)*
*G01N 15/06* *(2006.01)*

(86) Numéro de dépôt international:
**PCT/EP2009/063142**

(87) Numéro de publication internationale:
**WO 2010/040817 (15.04.2010 Gazette 2010/15)**

(54) **PROCEDE D'ANALYSE DE POLLUTION MOLÉCULAIRE D'UN FLUIDE, DISPOSITIF DE MISE EN OEUVRE ET APPLICATION À L'ANALYSE DE LA POLLUTION DANS UN MILIEU NATUREL ET DANS UN ENVIRONNEMENT MAITRISÉ**

VERFAHREN ZUR ANALYSE DER MOLEKULAREN VERUNREINIGUNG EINER FLÜSSIGKEIT, VORRICHTUNG ZUR DURCHFÜHRUNG DAVON UND ANWENDUNG ZUR ANALYSE DER VERUNREINIGUNG IN EINEM NATÜRLICHEN MEDIUM SOWIE IN EINER KONTROLLIERTEN UMGEBUNG

METHOD FOR ANALYSING THE MOLECULAR POLLUTION OF A FLUID, DEVICE FOR IMPLEMENTING SAME, AND APPLICATION FOR ANALYSING THE POLLUTION IN A NATURAL MEDIUM AND IN A CONTROLLED ENVIRONMENT

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **10.10.2008 FR 0856877**

(43) Date de publication de la demande:
**13.07.2011 Bulletin 2011/28**

(73) Titulaire: **Commissariat à l'Énergie Atomique et aux Énergies Alternatives
75015 Paris (FR)**

(72) Inventeur: **TOVENA-PECAULT, Isabelle
F-33850 Leognan (FR)**

(74) Mandataire: **Ilgart, Jean-Christophe et al
BREVALEX
95 rue d'Amsterdam
75378 Paris Cedex 8 (FR)**

(56) Documents cités:
**WO-A-2004/097399       WO-A-2006/022491
WO-A-2008/074843       US-A- 5 832 411
US-A1- 2005 053 515     US-A1- 2006 258 017
US-A1- 2008 009 099**

# Description

## DOMAINE TECHNIQUE

L'invention concerne le domaine de la pollution non particulaire ou autrement dit moléculaire d'un fluide.

L'invention a trait à l'analyse de ce type de pollution qui a lieu dans un environnement donné et à l'étude de son mode de dépôt sur différents matériaux ou types de tissus biologiques.

Le fluide dont on cherche à analyser la pollution moléculaire peut être dans le cadre de l'invention aussi bien un liquide qu'un gaz.

Les applications visées par l'invention sont nombreuses. Elle peut concerner l'analyse de la pollution moléculaire présente dans des milieux naturels, des salles propres ou zones à environnement maîtrisé apparenté, c'est-à-dire la connaissance des matériaux (ou nanomatériaux), notamment du domaine de l'ultra-propreté.

Elle peut également concerner la pollution environnementale chimique. Elle peut enfin concerner d'autres domaines: radiochimie, lutte contre le terrorisme, sûreté chimique, établissements de santé, recherche dans le domaine pharmaceutique.

## ART ANTÉRIEUR

La contamination moléculaire est désignée dans la norme ISO 14644-8 par une espèce moléculaire (non particulaire) susceptible d'avoir un effet indésirable sur le produit, le procédé ou l'équipement.

La contamination moléculaire peut être de type aéroportée et classée en tant que telle dans la récente norme ISO 14644-8.

La contamination peut être également de type surfacique. Suivant sa masse moléculaire et les conditions environnementales, la molécule aura plus ou moins tendance à se déposer sur telle ou telle surface. La capacité de sorption et/ou de réaction de ces molécules, une fois déposées sur les surfaces, dépend essentiellement des groupements chimiques fonctionnels de la molécule. Elle dépend aussi des caractéristiques géométriques (rugosité, aspérités, propreté particulaire...) et chimiques des surfaces et enfin des conditions d'environnement (notamment température, pression, hygrométrie et contamination particulaire en volume).

A ce jour, deux types de mesure existent et sont limités chacun à un type de contamination moléculaire. En ce qui concerne les contaminants moléculaires aéroportés, ils peuvent être prélevés à partir d'un certain volume de gaz défini préalablement puis fixés sur des matériaux adsorbants, tels que le Tenax®. Lorsque l'adsorption a été effectivement réalisée, l'analyse proprement dite de ces différents contaminants moléculaires consiste ensuite à réaliser une désorption, en particulier par thermo désorption par exemple en phase gazeuse, puis à réaliser une chromatographie en phase gazeuse couplée à la spectrométrie de masse (en anglais Gas chromatography-mass spectrometry ou GC/MS)

La quantité totale de contaminants moléculaires de type surfacique peut être suivie en continu par des capteurs acoustiques ou gravimétriques. Il peut s'agir d'une micro balance à quartz (QCM) qui a pour avantage une sensibilité très grande, de l'ordre de quelques angströms par $cm^2$.

Le principe de fonctionnement d'une microbalance à quartz est le suivant : on évalue en tant que grandeur la fréquence de vibration du quartz. Or, celle-ci est reliée à la masse du matériau par l'équation suivante :

$$\Delta F/F_0 = K \ m_{ads}$$

dans laquelle :

$F_0$ est la fréquence nominale du quartz (Hz) ;
$\Delta F$ est la variation de fréquence du quartz due à l'adsorption de gaz (Hz) ;
$K$ est la constante caractéristique du quartz ($kg^{-1}$) ;
$m_{ads}$ : la masse de gaz adsorbée (kg).

Classiquement, la fréquence nominale d'une balance à quartz est de l'ordre du MHz, la sensibilité massique est de l'ordre de quelques angströms par $cm^2$.

Il peut s'agir également de détecteurs à ondes acoustiques de surface (en anglais Surface Acoustic Wave (SAW)). Le principe de fonctionnement de ces capteurs SAW est la variation des caractéristiques de ces ondes (amplitude et vitesse) suite aux modifications chimiques puis mécaniques de son support de propagation.

Ainsi, dans un environnement maîtrisé, dans lequel un processus de fabrication a lieu en ligne, les mesures obtenues sont très globales (quantités de molécules déposées sur une surface et donc, présentes initialement dans le gaz à analyser) mais, elles n'informent en aucun cas sur la chimie de ces molécules ni sur leur mode de dépôt sur une autre surface que celle du quartz.

Pour obtenir l'analyse qualitative et quantitative de telles molécules dans le gaz, on doit passer par une phase d'adsorption sur un matériau adsorbant à très grande surface spécifique de type Tenax®. Or, comme mentionné ci-dessus, pour être certain qu'une adsorption soit réalisée, on définit jusqu'à présent un volume de gaz important et donc, une « exposition » de l'adsorbant au gaz à analyser suffisamment longue sans connaître la quantité de contaminants moléculaires d'une composition donnée réellement présente. Le risque majeur de cette technique est donc d'obtenir, à la fin de la durée d'exposition prédéfinie, des adsorbants soit complètement saturés par certaines espèces de contaminants, en particulier dans des procédés de fabrication qui émettent des phases très polluantes soit, au contraire, dans des limites de détection dans des environnements ultra-propres. L'analyse par GC/MS qui s'en suit peut ainsi s'avérer complètement inutile car, elle peut ne pas prendre en compte la quantité des molécules en sus de celles qui ont saturées l'(es) adsorbant(s). Autrement dit, les échantillons d'adsorbants ne sont pas vraiment analysables ou tout du moins peuvent induire une analyse faussée. De plus, chaque analyse est coûteuse. En outre, le « surplus » de polluants non moléculaires qui n'est pas analysé du fait de la saturation de l'adsorbant (autrement appelé « perçage » du matériau) peut avoir des conséquences dommageables sur des surfaces de matériaux sensibles dans l'environnement, tel qu'un milieu en salle propre.

Les documents suivants illustrent également l'art antérieur.

Le document US 2008/009099 décrit une méthode pour évaluer en temps réel la concentration d'éléments polluants dans un fluide. Ladite méthode comprend une étape de délivrance d'un flux gazeux à un appareil d'échantillonnage comprenant un matériau adsorbant (par exemple du Tenax). Une valeur de seuil est déterminée pour la concentration de certains composés dans le fluide et un signal d'alerte en cas de dépassement peut être émis. La mesures des composés a lieu en aval du filtre.

Le document US 2006/258017 décrit une méthode et un procédé pour l'analyse en temps réel des analytes présents par exemple dans un flux gazeux. En particulier, le flux est filtré pour supprimer les polluants particulaires, puis l'analyte est adsorbé et après passage par un détecteur, la quantité dudit analyte est déterminée.

Le but de l'invention est donc de proposer une solution qui permette une analyse fiable quantitative et qualitative des contaminants moléculaires présents dans un environnement.

Un but particulier est de connaître avec précision quelles compositions chimiques et quelle quantité d'une composition chimique donnée de contaminants moléculaires est susceptible de se déposer sur des surfaces sensibles de l'environnement.

## EXPOSÉ DE L'INVENTION

Pour ce faire, l'invention a pour objet un procédé d'analyse de pollution moléculaire d'un fluide selon lequel on réalise les étapes suivantes :

a) réalisation d'un débit calibré du fluide,
b) filtration du fluide de débit calibré afin de retenir les polluants particulaires et/ou nanoparticulaires,
c) mesure en temps réel de la quantité totale des polluants moléculaires présents dans le fluide à débit calibré et en aval de la filtration,
d) détermination de compositions chimiques et de la quantité relative des polluants moléculaires adsorbés dans au moins un échantillon réalisé en matériau (x) adsorbant(s) placé sur le circuit du fluide à débit calibré en aval de la mesure de la quantité totale, la détermination ayant lieu simultanément et/ou à intervalles de temps prédéterminés par rapport à un instant de dépassement d'une valeur seuil de la quantité totale des polluants moléculaires présents dans le fluide à débit calibré et mesurée en temps réel.

Ainsi, selon l'invention, les analyses par désorption sur l'(es) échantillon(s) en matériau(x) adsorbant(s) ne sont réalisées qu'après avoir mesuré la quantité totale de polluants moléculaires suffisantes.

Grâce à l'invention, on peut connaître avec précision la quantité de telle ou telle molécule déposée à la surface de tel ou tel matériau d'un environnement aux conditions de température et pression connues. En particulier, on peut connaître les molécules polluantes surtout déposées sur les surfaces des matériaux sensibles d'un environnement industriel aux conditions de température et de pression contrôlées.

La solution selon l'invention répond à un besoin émergent de maîtrise du niveau de contamination ou de pollution moléculaire atmosphérique ou déposé sur les surfaces de matériaux sensibles d'un environnement.

Le fluide dont on cherche à analyser la pollution moléculaire peut être un gaz ou un liquide. Dans le cas du liquide, celui-ci sera choisi afin de constituer en quelque sorte un vecteur de polluants moléculaires présents dans un environnement, typiquement sur des surfaces contaminées.

Selon une caractéristique, l'(es) échantillon(s) réalisé(s) en matériau (x) adsorbant(s) est (sont) adapté(s) pour adsorber des molécules organiques.

Il est possible de prévoir plusieurs échantillons de matériau(x) adsorbant(s) à capacité d'adsorption différente placés sur le circuit du fluide à débit calibré en aval de la mesure de la quantité totale.

Avantageusement, on commence la détermination des compositions chimiques des polluants par l'(es) échantillon(s) de matériau(x) adsorbant(s) à plus forte capacité d'adsorption. Il peut s'agir avantageusement du Tenax®. Il a pour avantage d'être une phase polymérique adsorbante très utilisée pour l'extraction de composés organiques volatils dans l'air.

Les autres matériaux adsorbants peuvent être constitués par des matériaux représentatifs de matériaux sensibles de salles propres. Ils peuvent ainsi être constitués en Aluminium, inox 304 ou 316L, ou en un verre à base de silice éventuellement traité. Dans le domaine de l'analyse biologique, les matériaux sensibles étudiés peuvent être représentatifs des tissus biologiques ou de cellules vivantes.

Afin d'étudier l'effet des conditions de température et d'hygrométrie sur l'adsorption par un matériau sensible de l'environnement, on contrôle avantageusement la température du fluide à débit calibré et lorsque le fluide est un gaz, on contrôle également l'hygrométrie du gaz à débit calibré.

La détermination de compositions chimiques et des quantités relatives des polluants moléculaires adsorbés sur l'(es) échantillon(s) en matériau adsorbant peut être réalisée in situ, moyennant un couplage avec des moyens d'extraction des adsorbants du fluide (liquide ou gaz) et des moyens d'analyse par chromatographie couplés eux-mêmes à un spectromètre de masse.

Ils peuvent être également selon une alternative réalisés ex-situ par retrait de l'(es) échantillon(s) du circuit du fluide à débit calibré et traitement dans une unité de désorption.

Lorsque le fluide est un liquide, on réalise avantageusement une analyse selon une technique CMLS (en anglais Liquid Chromatography Mass Spectrometry).

L'invention concerne également un dispositif d'analyse de pollution moléculaire d'un fluide présent dans un environnement comprenant:

- des moyens pour calibrer un débit du fluide,
- des moyens de filtration particulaire du fluide à débit calibré afin de retenir les polluants particulaires,
- des moyens de mesure en temps réel de la quantité totale des polluants moléculaires présents dans le fluide à débit calibré, lesdits moyens de mesure étant agencés sur le circuit du fluide à débit calibré en aval des moyens de filtration,

- des moyens d'alerte de dépassement de la quantité totale des polluants moléculaires présents dans le fluide à débit calibré,
- au moins un échantillon réalisé en matériau adsorbant placé sur le circuit du fluide à débit calibré en aval de la mesure de la quantité totale,
- des moyens pour déterminer les compositions chimiques et leur quantité relative dans l'(es) échantillon(s) en matériau(x) adsorbant(s).

Les moyens de filtration peuvent être un filtre à mailles de taille typiquement inférieure à 0,2 $\mu$m.

Les moyens pour calibrer un débit du fluide peuvent comprendre une pompe placée en aval de l' (des) échantillon(s) en matériau(x) adsorbant(s). Eventuellement, les moyens de calibrage comprennent une jauge de pression et/ou un débitmètre.

Les moyens de mesure en temps réel de la quantité totale de polluants non particulaires peuvent comprendre au moins un capteur de type acoustique ou gravimétrique. On utilise de préférence ce(s) capteur(s) pour leur précision allant à ce jour jusqu'à l'A°/cm$^2$. On pourrait également utiliser des moyens d'analyse optique (ellipsométrie, Spectrométrie à Infra-Rouge par Transformée de Fourier (FTIR)...).

Pour un liquide ou un gaz à analyser, on peut utiliser une microbalance à quartz à la sensibilité adaptée à un liquide ou gaz. Typiquement, le seuil de sensibilité d'une microbalance à quartz pour l'analyse de molécules dans un liquide sera de l'ordre de quelques A°/cm$^2$, et pour l'analyse d'un gaz également de l'ordre de quelques A°/cm$^2$.

Les moyens de détermination des compositions chimiques et de leur quantité relative dans l'(es) échantillon(s) en matériau(x) adsorbant(s) comprennent avantageusement une unité de thermo-désorption et un ensemble mettant en oeuvre la chromatographie en phase liquide ou en phase gazeuse couplée à la spectrométrie de masse (en anglais Gas chromatography-mass spectrometry ou GC/MS).

Le dispositif peut comprendre :

- un ensemble de convoyage de type carrousel agencé en étant monté tournant dans le circuit de fluide en aval des moyens de mesure en temps réel de la quantité totale des polluants moléculaires, le carrousel comprenant une pluralité de supports adaptés pour supporter chacun un échantillon de matériau adsorbant,
- un système étanche de type sas agencé adjacent au circuit de fluide, l'agencement du sas permettant de pouvoir retirer individuellement un échantillon de matériau(x) adsorbant(s) de son support dans une position donnée du carrousel tout en continuant la mesure en temps réel de la quantité totale des polluants moléculaires présents dans le fluide à débit calibré et l'adsorption des polluants moléculaires par les autres échantillons de matériau(x) adsorbant(s) maintenus sur leur support respectif.

Le sas peut comprendre une unité de désorption telle qu'un four pour thermo-désorption et est connecté à un ensemble GC/MS afin de réaliser en temps réel et en continu la détermination des compositions chimiques et de leur quantité relative sur l'échantillon en matériau(x) adsorbant(s). Le sas peut également comprendre un réacteur pour l'extraction liquide puis analyse par CMLS.

Avantageusement, on peut prévoir que tous les éléments présents dans le circuit de fluide à débit calibré (filtre particulaire, les parois du circuit en lui-même, les moyens de mesure de la quantité totale en temps réel, le carrousel...) soient réalisées en matériaux chimiquement inertes ou neutres. Une définition de matériaux neutre est donnée dans la demande de brevet de la demanderesse publiée sous le numéro WO 2008/074843 : il peut ainsi s'agir de PTFE sur de l'inox ou de la silice inactivée par du diméthyldichlorosilane.

L'invention concerne enfin l'application du procédé ou du dispositif définis ci-dessus, pour l'analyse de la pollution d'un milieu naturel ou de la propreté de lignes de synthèse chimique, fabrication de pièces ou de lignes expérimentales, telles que des salles propres.

Avantageusement, l'invention s'applique à certaines industries (spatial, micromécanique, optique, nanotechnologies mais aussi industrie pharmaceutique et agroalimentaire, hôpitaux...), dans lesquelles la maîtrise du niveau de contamination chimique ou biochimique sur le process/produit/patient est une exigence vitale pour les cellules ou tissus biologiques, organismes vivants (bactéries...). Ainsi, l'invention permet d'alerter sur la croissance in situ de films moléculaires chimiquement critiques vis-à-vis de telle ou telle surface fonctionnelle d'un environnement dans lequel on cherche à obtenir les conditions d'ultra propreté (spatial, microélectronique, optique, laser de puissance, pharmacie, recherche médicale, établissements de santé...).

**BRÈVE DESCRIPTION DES DESSINS**

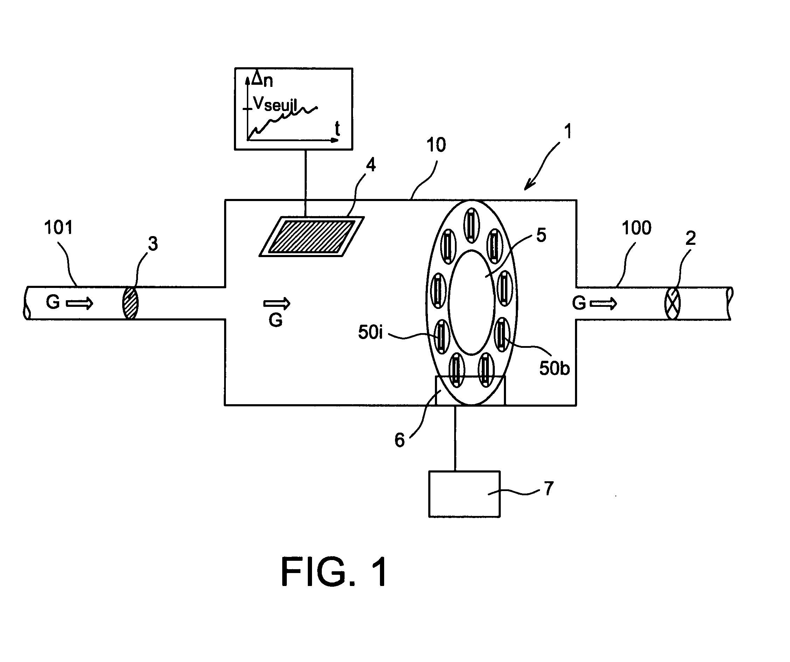

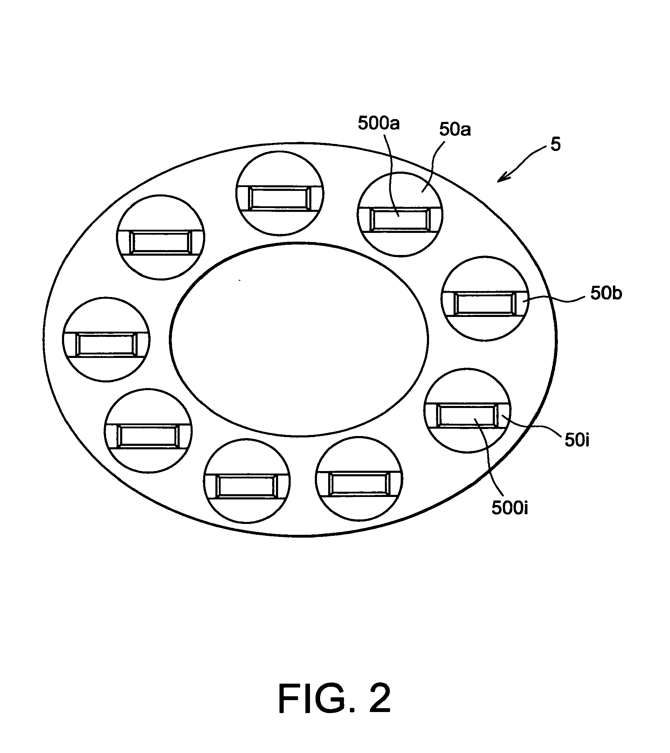

D'autres avantages et caractéristiques ressortiront mieux à la lecture de la description détaillée de l'invention, à titre illustratif, faite en référence aux figures 1 et 2 qui représentent :

- figure 1 : une vue schématique d'un dispositif d'analyse de la pollution moléculaire d'un fluide selon un mode de réalisation de l'invention,
- figure 2 : une vue schématique d'une partie du dispositif selon la figure 1 et illustrant l'adsorption des polluants moléculaires selon l'invention.

**EXPOSÉ DÉTAILLÉ DE MODES DE RÉALISATION PARTICULIERS**

Un dispositif 1 d'analyse de la pollution moléculaire présente dans un environnement est représenté schématiquement en figure 1.

Ce dispositif 1 comprend un circuit 10 dont on maitrise l'aéraulique : il comprend un canal unique 100 relié à une pompe aspirante 2 au débit calibré.

Ainsi, la pompe 2 en fonctionnement aspire un débit calibré de gaz G depuis l'environnement dont on cherche à analyser la pollution moléculaire.

A proximité de l'entrée d'aspiration 101, est implantée un filtre particulaire 3 dans le circuit afin de filtrer les molécules et de retenir les particules présentes dans le gaz dont on cherche à analyser les molécules polluantes.

En aval du filtre 3, est implanté un capteur de type microbalance à quartz 4 qui permet de connaitre en fonction du temps t la quantité totale Δm de molécules polluantes.

En aval de la microbalance à quartz 4, un ensemble de convoyage de type carrousel 5 est agencé en étant monté tournant dans le circuit de fluide. Ce carrousel 5 comprend une pluralité de supports 50a, 50b, ...50i adaptés pour supporter chacun un échantillon de matériau adsorbant 500a, 500b...500i (figure 2). On utilise de préférence comme échantillon de plus grande capacité d'adsorption un échantillon 500a de Tenax®. Ce matériau a l'avantage d'être une phase polymérique adsorbante permettant d'extraire de l'air des composés organiques volatils.

Un sas étanche 6 est agencé adjacent au circuit de fluide 10. L'agencement du sas 6 permet de pouvoir retirer individuellement un échantillon de matériau adsorbant 500 de son support dans une position donnée du carrousel. Tel qu'illustré en figure 1, l'échantillon qui se trouve dans le sas 6 est un échantillon de Tenax® 500a.

Le sas 6 comprend en outre un four de désorption couplé à une unité GC/MS 7.

Le fonctionnement du dispositif 1 va maintenant être décrit.

Le dispositif 1 est d'abord placé dans l'environnement dont on cherche à connaître la pollution moléculaire.

On réalise un débit calibré de gaz G en déclenchant la pompe 2.

Les polluants particulaires présents dans le gaz G sont alors filtrés par le filtre 3 agencé dans la partie amont du circuit 10.

La microbalance à quartz 4 mesure alors en continu la quantité totale des polluants moléculaires présents dans le gaz G à débit calibré et dépourvu de polluants particulaires.

La rotation du carrousel 5 est permanente tant que la valeur seuil V n'est pas dépassée et ce, afin de permettre d'avoir un milieu homogène.

Lorsque la quantité totale de polluants moléculaires mesurée par le capteur 4 a dépassé une valeur seuil V, on arrête temporairement le carrousel 5 de sorte qu'un échantillon 500a initialement balayé par le flux de gaz G calibré soit isolé dans le sas 6 (figure 1). L'extraction des polluants moléculaires peut alors commencer.

L'arrêt du carrousel 5 peut s'effectuer quasi en temps réel par rapport à cet instant.

Le four de désorption en fonctionnement permet alors de détacher les molécules adsorbées par l'échantillon de matériau 500a.

Les molécules désorbées par le four sont alors analysées dans leur composition chimique et leur quantité relative par l'unité GC/MS 7.

Quelque soit l'échantillon 500a, ...500i qui subit une analyse, la mesure en temps réel de la quantité totale des polluants moléculaires présents dans le fluide à débit calibré et l'adsorption des polluants moléculaires par les autres échantillons de matériau adsorbant maintenus sur leur support respectif sont poursuivies. L'analyse de la composition chimique et des quantités relatives des polluants moléculaires présents dans les autres échantillons est alors déclenchée lorsqu'une autre valeur seuil est atteinte.

L'ensemble des parois du circuit 10 de gaz G, du carrousel 5 et du sas 6 sont avantageusement recouvertes d'un revêtement en téflon®.

Pour étudier l'influence des conditions de température et d'hygrométrie sur l'effet d'adsorption des polluants moléculaires, le dispositif 1 peut être prévu avec des moyens de contrôle, c'est-à-dire d'élévation ou d'abaissement, de la température, d'hygrométrie et de la pression du gaz G.

On peut également envisager une extraction par voie liquide (Chromatographie liquide).

## Revendications

**1.** Procédé d'analyse de pollution moléculaire d'un fluide selon lequel on réalise les étapes suivantes :

a) réalisation d'un débit calibré du fluide,
b) filtration du fluide de débit calibré afin de retenir les polluants particulaires et nanoparticulaires,
c) mesure en temps réel de la quantité totale des polluants moléculaires présents dans le fluide à débit calibré et en aval de la filtration,
d) détermination de compositions chimiques et de la quantité relative des polluants moléculaires adsorbés dans au moins un échantillon (500a, 500b, 500i...) réalisé en matériau (x) adsorbant(s) placé sur le circuit du fluide à débit calibré en aval de la mesure de la quantité totale, la détermination ayant lieu simultanément et/ou à intervalles de temps prédéterminés par rapport à un instant de dépassement d'une valeur seuil de la quantité totale des polluants moléculaires présents dans le fluide à débit calibré et mesurée en temps réel.

**2.** Procédé selon la revendication 1, selon lequel l'(es) échantillon(s) réalisé(s) en matériau(x) adsorbant(s) est (sont) adapté(s) pour adsorber des molécules organiques.

**3.** Procédé selon la revendication 1 ou 2, selon lequel plusieurs échantillons de matériau(x) adsorbant(s) à capacité d'adsorption différente sont placés sur le circuit du fluide à débit calibré en aval de la mesure de la quantité totale.

**4.** Procédé selon l'une quelconque des revendications précédentes, selon lequel la détermination des compositions chimiques des polluants commence par l'(es) échantillon(s) de matériau(x) adsorbant(s) à plus forte capacité d'adsorption.

**5.** Procédé selon l'une quelconque des revendications précédentes, selon lequel on contrôle la température du fluide à débit calibré.

**6.** Procédé selon l'une quelconque des revendications précédentes, selon lequel le fluide est un gaz et selon lequel on contrôle l'hygrométrie du gaz à débit calibré.

**7.** Procédé selon l'une quelconque des revendications précédentes, selon lequel la détermination de compositions chimiques et de la quantité relative des polluants moléculaires adsorbés sur l' (es) échantillon (s) en matériau (x) adsorbant (s) sont réalisés in situ.

**8.** Procédé selon l'une quelconque des revendications 1 à 6, selon lequel la détermination de compositions chimiques et des quantités relatives des polluants moléculaires adsorbés dans l'(es) échantillon(s) en matériau(x) adsorbant(s) sont réalisés ex-situ par retrait de l'(es) échantillon(s) du circuit du fluide à débit calibré et traitement dans une unité de désorption.

**9.** Dispositif (1) d'analyse de pollution moléculaire d'un fluide présent dans un environnement comprenant:

- des moyens (2) pour calibrer un débit du fluide,
- des moyens de filtration particulaire (3) du fluide à débit calibré afin de retenir les polluants particulaires et nanoparticulaires,
- des moyens de mesure (4) en temps réel de la quantité totale des polluants moléculaires présents dans le fluide à débit calibré, lesdits moyens de mesure étant agencés sur le circuit (10) du fluide à débit calibré en aval des moyens de filtration,
- des moyens d'alerte de dépassement de la quantité totale des polluants moléculaires présents dans le fluide à débit calibré,
- au moins un échantillon (500a, 500b, 500i...) réalisé en matériau adsorbant placé sur le circuit du fluide à débit calibré en aval de la mesure de la quantité totale,
- des moyens pour déterminer les compositions chimiques des polluants moléculaires et leur quantité relative dans l'(es) échantillon (s) en matériau (x) adsorbant(s).

**10.** Dispositif selon la revendication 9, dans lequel les moyens pour calibrer un débit du fluide comprennent une pompe (2) placée en aval de l'(des) échantillon (s) en matériau(x) adsorbant(s) et le cas échéant, une jauge de pression et/ou un débitmètre.

**11.** Dispositif selon la revendication 9 ou 10, dans lequel les moyens de mesure en temps réel de la quantité totale de polluants moléculaires comprennent au moins un capteur (4) de type acoustique ou gravimétrique.

**12.** Dispositif selon l'une des revendications 9 à 11, dans lequel les moyens de détermination des compositions chimiques et de leur quantité relative dans l'(es) échantillon(s) en matériau(x) adsorbant(s) comprennent une unité de thermo-désorption et un ensemble mettant en oeuvre la chromatographie en phase liquide ou en phase gazeuse couplée à la spectrométrie de masse

**13.** Dispositif selon l'une des revendications 9 à 12, comprenant :

- un ensemble de convoyage de type carrousel (5) agencé en étant monté tournant dans le circuit de fluide en aval des moyens de mesure en temps réel de la quantité totale des polluants moléculaires, le carrousel comprenant une pluralité de supports adaptés pour supporter chacun un échantillon de matériau(x) adsorbant(s), - un système étanche de type sas (6) agencé adjacent au circuit de fluide, l'agencement du sas permettant de pouvoir retirer individuellement un échantillon de matériau(x) adsorbant (s) de son support dans une position donnée du carrousel tout en continuant la mesure en temps réel de la quantité totale des polluants moléculaires présents dans le fluide à débit calibré et l'adsorption des polluants moléculaires par les autres échantillons de matériau(x) adsorbant(s) maintenus sur leur support respectif.

**14.** Dispositif selon la revendication 13 en combinaison avec la revendication 12, dans lequel le sas comprend une unité de désorption (7) telle qu'un four pour thermo-désorption et est connecté à un ensemble GC/MS afin de réaliser en temps réel et en continu la détermination des compositions chimiques et de leur quantité relative sur l'échantillon en matériau (x) adsorbant(s).

**15.** Application du procédé selon l'une quelconque des revendications 1 à 8 ou du dispositif selon l'une quelconque des revendications 9 à 14, pour l'analyse de la pollution d'un milieu naturel ou de la propreté de lignes de fabrication de pièces, de synthèse chimique ou de lignes expérimentales, telles que des salles propres, ou de la propreté d'établissements de santé.

**Claims**

**1.** A method for analyzing molecular pollution of a fluid according to which the following steps are carried out:

a) producing a calibrated flow of the fluid,
b) filtering the fluid with calibrated flow in order to retain the particulate and nanoparticulate pollutants,
c) measuring in real time the total amount of molecular pollutants present in the fluid with calibrated flow and downstream from the filtration,
d) determining chemical compositions and the relative amount of molecular pollutants adsorbed in at least one sample made in adsorbent material(s) placed on the circuit of the fluid with calibrated flow downstream from the measurement of the total amount, the determination taking place simultaneously and/or at predetermined time intervals relatively to an instant when a threshold value of the total amount of molecular pollutants present in the fluid with calibrated flow and measured in real time is exceeded.

**2.** The method according to claim 1, according to which the sample (s) made in adsorbent material (s) is (are) adapted for adsorbing organic molecules.

**3.** The method according to claim 1 or 2, according to which several samples of adsorbent material(s) with different adsorption capacity are placed on the circuit of fluid with calibrated flow downstream from the measurement of the total amount.

**4.** The method according to claim 1, according to which the determination of the chemical compositions of the pollutants begins with the sample(s) of adsorbent material(s) with greater adsorption capacity.

**5.** The method according to claim 1, according to which the temperature of the fluid with calibrated flow is controlled.

**6.** The method according to claim 1, according to which the fluid is a gas and according to which the hygrometry of the gas with calibrated flow is controlled.

**7.** The method according to claim 1, according to which the determination of chemical compositions and of the relative amount of molecular pollutants adsorbed on the sample(s) made in adsorbent material(s) are carried out *in situ*.

**8.** The method according to claim 1, according to which the determination of chemical compositions and of the relative amounts of the molecular pollutants adsorbed in the sample(s) made in adsorbent material (s) is carried out *ex situ* by removing the sample (s) from the circuit of the fluid with calibrated flow and by treatment in a desorption unit.

**9.** A device for analyzing molecular pollution of a fluid present in an environment comprising:

- means for calibrating flow of the fluid,
- means for particle filtration of the fluid with calibrated flow in order to retain the particulate and nanoparticulate pollutants,
- means for measuring in real time the total amount of the molecular pollutants present in the fluid with calibrated flow, said measurement means being laid out on the circuit of the fluid with calibrated flow downstream from the filtration means,
- alarm means for when the total amount of the molecular pollutants present in the fluid with calibrated flow is in excess,
- at least one sample made in an adsorbent material placed on the circuit of the fluid with calibrated flow downstream from the measurement of the total amount,

- means for determining the chemical compositions of the molecular pollutants and their relative amount in the sample(s) made in adsorbent material(s).

10. The device according to claim 9, wherein the means for calibrating a flow of the fluid comprise a pump placed downstream from the sample(s) made in adsorbent material(s) and if necessary, a pressure gauge and/or a flow meter.

11. The device according to claim 9, wherein the means for measuring in real time the total amount of non-molecular pollutants comprise at least one sensor of the acoustic or gravimetric type.

12. The device according to claim 9, wherein the means for determining the chemical compositions and their relative amount in the sample(s) made in adsorbent material(s) comprise a thermo-desorption unit and an assembly applying liquid or gas phase chromatography coupled with mass spectrometry.

13. The device according to claim 9 comprising:

- a conveying assembly of the carousel type laid out so as to be rotatably mounted in the fluid circuit downstream from the means for measuring in real time the total amount of molecular pollutants, the carousel comprising a plurality of supports adapted for each supporting a sample of adsorbent material(s),
- a sealed system of the airlock type laid out adjacent to the fluid circuit, the layout of the airlock allowing a sample of adsorbent material(s) to be individually removed from its support in a given position of the carousel while continuing the real time measurement of the total amount of the molecular pollutants present in the fluid with calibrated flow and the adsorption of the molecular pollutants by the other samples of adsorbent material(s) maintained on their respective support.

14. The device according to claim 13 combined with claim 12, in which the airlock comprises a desorption unit such as oven for thermo-desorption is connected to a GC/MS assembly in order to carry out in real time and continuously the determination of the chemical compositions and of their relative amount on the sample made in adsorbent material(s).

15. The application of the method according to any of claims 1 to 8 or of the device according to any of claims 9 to 14, for analyzing the pollution of a natural medium or the cleanliness of part manufacturing, chemical synthesis lines or experimental lines, such as clean rooms, or cleanliness of health-care establishments.

**Patentansprüche**

1. Verfahren zur Analyse der molekularen Verunreinigung eines Fluids, wobei die folgenden Schritte ausgeführt werden:

a) Erzeugen einer kalibrierten Durchflussmenge des Fluids,
b) Filtrieren des Fluids mit der kalibrierten Durchflussmenge, um die Verunreinigungen in Teilchen- und Nanoteilchenform zurückzufalten,
c) Messen in Echtzeit der Gesamtmenge der in dem Fluid mit der kalibrierten Durchflussmenge vorhandenen molekularen Verunreinigungen nach dem Filtrieren,
d) Bestimmen der chemischen Zusammensetzungen und der relativen Menge der molekularen Verunreinigungen, die in wenigstens einer Probe (500a, 500b, 500i...) adsorbiert sind, die aus einem adsorbierenden Material(ien) hergestellt ist und in einem Kreis des Fluids mit der kalibrierten Durchflussmenge nach dem Messen der Gesamtmenge angebracht ist, wobei das Bestimmen gleichzeitig und/oder in vorbestimmten Zeitabständen bezüglich eines Zeitpunkts stattfindet, an dem ein in Echtzeit gemessener Schwellenwert der Gesamtmenge der in dem Fluid mit der kalibrierten Durchflussmenge vorhandenen molekularen Verunreinigungen überschritten wird.

2. Verfahren gemäß Anspruch 1, wobei die aus einem adsorbierenden Material(ien) hergestellte(n) Probe (n) zum Adsorbieren von organischen Molekülen geeignet sind.

3. Verfahren gemäß Anspruch 1 oder 2, wobei mehrere Proben aus einem adsorbierenden Material(ien) mit unterschiedlichem Adsorptionsvermögen in dem Kreis des Fluids mit der kalibrierten Durchflussmenge nach dem Messen der Gesamtmenge angebracht sind.

4. Verfahren gemäß einem der vorangehenden Ansprüche, wobei das Bestimmen der chemischen Zusammensetzungen der Verunreinigungen mit der (den) Probe(n) aus dem (den) absorbierendem (absorbierenden) Material(ien) mit dem höchste Adsorptionsvermögen beginnt.

5. Verfahren gemäß einem der vorangehenden Ansprüche, wobei die Temperatur des Fluids mit der kalibrierten Durchflussmenge kontrolliert wird.

6. Verfahren gemäß einem der vorangehenden Ansprüche, wobei das Fluid ein Gas ist und die Feuchtigkeit des Gases mit der kalibrierten Durchflussmenge kontrolliert wird.

7. Verfahren gemäß einem der vorangehenden Ansprüche, wobei das Bestimmen der chemischen Zusammensetzungen und der relativen Menge der auf der (den) Probe(n) aus dem (den) absorbierendem (absorbierenden) Material(ien) adsorbierten molekularen Verunreinigungen in situ durchgeführt werden.

8. Verfahren gemäß einem der Ansprüche 1 bis 6, wobei das Bestimmen der chemischen Zusammensetzungen und der relativen Mengen der auf der (den) Probe(n) aus dem (den) absorbierendem (absorbierenden) Material(ien) adsorbierten molekularen Verunreinigungen durch Entnahme der Probe(n) aus dem Kreis des Fluids mit der kalibrierten Durchflussmenge und Behandeln in einer Desorptionseinheit ex situ durchgeführt werden.

9. Vorrichtung (1) zur Analyse der molekularen Verunreinigung eines in einer Umgebung vorhandenen Fluids umfassend:

- Mittel (2) zum Kalibrieren der Durchflussmenge des Fluids,
- Mittel (3) zur Teilchenfiltration des Fluids mit der kalibrierten Durchflussmenge, um die Verunreinigungen in Teilchen- und Nanoteilchenform zurückzufalten,
- Mittel (4) zum Messen in Echtzeit der Gesamtmenge der in dem Fluid mit der kalibrierten Durchflussmenge vorhandenen molekularen Verunreinigungen, wobei diese Mittel zum Messen in dem Kreis (10) des Fluids mit kalibrierter Durchflussmenge nach den Mitteln zum Filtrieren angeordnet sind,
- Mittel zum Warnen vor einem Überschreiten der Gesamtmenge der in dem Fluid mit der kalibrierten Durchflussmenge vorhandenen molekularen Verunreinigungen,
- wenigstens eine Probe (500a, 500b, 500i...), die aus einem adsorbierenden Material hergestellt ist und in dem Kreis des Fluids mit der kalibrierten Durchflussmenge nach dem Messen der Gesamtmenge angebracht ist,
- Mittel zum Bestimmen der chemischen Zusammensetzung der molekularen Verunreinigungen und ihrer relativen Menge in der (den) Probe(n) aus absorbierendem (absorbierenden) Material (ien).

10. Vorrichtung gemäß Anspruch 9, wobei die Mittel zum Kalibrieren der Durchflussmenge des Fluids eine nach der (den) Probe(n) aus einem adsorbierenden Material(ien) angeordnete Pumpe (2) und gegebenenfalls einen Druckmesser und/oder einen Durchflussmesser umfassen.

11. Vorrichtung gemäß Anspruch 9 oder 10, wobei die Mittel zum Messen in Echtzeit der Gesamtmenge der molekularen Verunreinigungen wenigstens einen Sensor (4) des akustischen oder gravimetrischen Typs umfassen.

12. Vorrichtung gemäß einem der Ansprüche 9 bis 11, wobei die Mittel zum Bestimmen der chemischen Zusammensetzungen und ihrer relativen Menge in dem (der) Probe(n) aus einem adsorbierenden Material (ien) eine Einheit zur Thermodesorption und eine Einheit zur Durchführung einer massenspektrometrisch gekoppelten Chromatographie in flüssiger Phase oder in der Gasphase umfassen.

13. Vorrichtung gemäß einem der Ansprüche 9 bis 12 umfassend:

- eine Transporteinheit (5) des Karuselltyps, die in dem Fluidkreis nach den Mitteln zum Messen in Echtzeit der Gesamtmenge der molekularen Verunreinigungen drehbar angebracht ist, wobei das Karussell eine Mehrzahl Träger umfasst, die jeweils eine Probe aus dem (den) adsorbierenden Material(ien) aufnehmen können,
- ein geschlossenes System (6) des Schleusentyps, das gegenüber dem Fluidkreis angebracht ist, wobei es die Anbringung der Schleuse gestattet, eine Probe aus dem (den) adsorbierenden Material(ien) einzeln von ihrem Träger in einer vorgegebenen Position des Karussells zu entnehmen, während das Messen in Echtzeit der Gesamtmenge der in dem Fluid mit der kalibrierten Durchflussmenge vorhandenen molekularen Verunreinigungen und die Adsorption der molekularen Verunreinigungen durch die anderen, auf ihren jeweiligen Trägern festgehaltenen Proben aus einem adsorbierenden Material(ien) fortgesetzt wird.

14. Vorrichtung gemäß Anspruch 13 in Kombination mit Anspruch 12, wobei die Schleuse eine Desorptionseinheit (7) wie etwa einen Ofen zur Thermodesorption umfasst und an eine GC/MS-Einheit abgeschlossen ist, um in Echtzeit und kontinuierlich die chemische Zusammensetzung und ihre relative Menge auf der Probe aus dem (den) adsorbierenden Material(ien) zu messen.

15. Anwendung des Verfahrens gemäß einem der Ansprüche 1 bis 8 oder der Vorrichtung gemäß einem der Ansprüche 9 bis 14 zur Analyse der Verunreini-

**EP 2 342 547 B1**

gung eines natürlichen Mediums oder der Sauberkeit von Fertigungsstrassen für Werkstücke, chemischen Synthesen oder Versuchsstrassen wie etwa Reinräumen oder der Sauberkeit von Gesundheitseinrichtungen.

FIG. 1

# FIG. 2

**EP 2 342 547 B1**

## RÉFÉRENCES CITÉES DANS LA DESCRIPTION

**Documents brevets cités dans la description**

- US 2008009099 A
- US 2006258017 A
- WO 2008074843 A